# FASCICULE DE BREVET EUROPEEN

(11) **EP 3 854 664 B1**
(45) Date de publication et mention de la délivrance du brevet: **04.05.2022**
(21) Numéro de dépôt: 21152829.4
(22) Date de dépôt: 21.01.2021
(51) Int. Cl.: B62D 35/00, B60Q 1/30, B60Q 1/26

(54) **VÉHICULE AUTOMOBILE COMPRENANT UN DISPOSITIF AÉRODYNAMIQUE**
KRAFTFAHRZEUG, DAS EINE AERODYNAMISCHE VORRICHTUNG UMFASST
MOTOR VEHICLE COMPRISING AN AERODYNAMIC DEVICE

(30) Priorité: 24.01.2020 FR 2000715
(43) Date de publication de la demande: 28.07.2021
(73) Titulaire: Renault s.a.s, 92100 Boulogne Billancourt (FR)
(72) Inventeur: CHAUMEIL, Romain, 78650 Beynes (FR); LHER, Alain, 78310 MAUREPAS (FR)
(74) Mandataire: Renault Group

(56) Documents cités:
- CN-U- 207 173 753
- US-A1- 2013 076 064
- US-A1- 2019 382 063
- US-A1- 2020 001 935
- US-B1- 7 862 102

## Description

La présente invention concerne un déflecteur aérodynamique arrière d'un véhicule automobile. Le durcissement des normes de pollution et la réduction de la consommation poussent les constructeurs automobiles à rechercher des performances aérodynamiques optimales sur les véhicules automobiles. Dans cette optique, on cherche à améliorer la trainée aérodynamique générée à l'arrière des véhicules. Celle-ci dépend fortement de la dépression qui apparait à l'arrière du véhicule et qui est nécessairement impactée par la forme de la carrosserie. On parle de « trainée de culot » pour désigner la trainée aérodynamique soumise à cette dépression et aux turbulences à l'arrière du véhicule. Pour réduire cette dépression et améliorer la trainée aérodynamique, on connait des dispositifs consistant à réduire la surface arrière du véhicule. Le document US 6485087B1 présente des déflecteurs arrière prolongeant la surface latérale au-delà de la face arrière du véhicule, jusqu'à une ligne de fuite latérale s'étendant suivant la direction verticale. Les documents US6286894 et US20100201153 décrivent d'autres véhicules comportant des déflecteurs arrière reliés à la structure du véhicule par des systèmes à biellettes autorisant un déplacement des déflecteurs. Le CN 207 173 753 U décrit un véhicule automobile comprenant dans une zone arrière du véhicule, une première surface de carrosserie sensiblement horizontale, un déflecteur arrière relié à la structure du véhicule par un système à biellettes permettant de déplacer le déflecteur entre d'une part une position avant rétractée dans laquelle la surface extérieure du déflecteur est affleurante avec la première surface et d'autre part une position arrière déployée dans laquelle la surface extérieure du déflecteur chevauche une deuxième surface de carrosserie du véhicule, cette deuxième surface de carrosserie étant dissimulée par le déflecteur lorsqu'il est dans la position avant rétractée.

Cependant ces dispositifs ne permettent pas un accès optimal à l'arrière du véhicule. Ces déflecteurs entrent en conflit avec l'ouvrant de type hayon ou les ouvrants de type à portes battantes. Ce type de déflecteurs limitent également la dimension de l'ouverture à l'arrière du véhicule. De plus les déflecteurs aérodynamiques arrière connus s'intègrent imparfaitement dans la carrosserie du véhicule.

Le but de l'invention est donc de proposer un véhicule comprenant des déflecteurs aérodynamiques arrière s'intégrant parfaitement au véhicule tout en conservant des cotes de chargement et des dimensions d'ouvrant maximales à l'arrière du véhicule.

La présente invention a pour objet un véhicule automobile comprenant sur chacun de ses côtés et dans une zone arrière du véhicule, une première surface de carrosserie latérale sensiblement verticale, un déflecteur arrière latéral relié à la structure du véhicule par un système à biellettes permettant de déplacer le déflecteur entre d'une part une position avant rétractée dans laquelle une surface extérieure latérale du déflecteur est affleurante avec la première surface et d'autre part une position arrière déployée dans laquelle la surface extérieure latérale du déflecteur est affleurante avec une deuxième surface de carrosserie latérale du véhicule, cette deuxième surface de carrosserie latérale étant dissimulée par le déflecteur lorsqu'il est dans la position avant rétractée.

D'autres caractéristiques de l'invention sont indiquées ci-après.

Le système à biellettes comprend deux biellettes sensiblement parallèles ayant chacune une extrémité intérieure articulée sur la structure du véhicule, et une extrémité extérieure articulée sur une face intérieure du déflecteur.

La surface extérieure latérale du déflecteur dans la position arrière déployée est orientée de façon sensiblement verticale et forme un angle compris entre 10° et 20° par rapport à la direction longitudinale du véhicule, cet angle étant plus particulièrement de l'ordre de 15°.

Le déflecteur a la forme générale d'un L vue dans une section horizontale, la branche longue du L s'étendant longitudinalement sur le côté du véhicule tandis que la branche courte du L s'étend transversalement sur la face arrière du véhicule.

Le déflecteur comporte des moyens de signalisation lumineuse localisés dans la branche courte et dans une zone localisée verticalement, un faisceau électrique déployable étant prévu pour alimenter les moyens de signalisation lumineuse.

Le véhicule comprend au moins une porte battante arrière articulée par son bord latéral sur un montant vertical de structure du véhicule, entre une position fermée sensiblement parallèle à la direction transversale du véhicule et une position d'ouverture maximale formant un angle sensiblement à 180° par rapport à la position fermée, un jeu étant ménagé entre le bord latéral de la porte battante et le déflecteur en position avant rétractée quelle que soit la position angulaire de la porte entre la position fermée et la position d'ouverture maximale.

Le véhicule comprend un actionneur, notamment électrique ou pneumatique, relié à au moins l'une des biellettes pour lui imposer un pivotement par rapport à la structure, cet actionneur étant piloté par un calculateur du véhicule de façon à déployer et/ou rétracter automatiquement le déflecteur lorsque des données relatives à la vitesse du véhicule sont reçues par le calculateur.

L'invention a également pour objet un procédé d'actionnement d'un déflecteur arrière latéral d'un véhicule automobile, disposé sur chacun de ses côtés et dans une zone arrière du véhicule, le déflecteur étant relié à la structure du véhicule par deux biellettes sensiblement parallèles, permettant de déplacer le déflecteur entre d'une part une position avant rétractée dans laquelle une surface extérieure latérale du déflecteur est affleurante avec une première surface de carrosserie latérale sensiblement verticale du véhicule et d'autre part une position arrière déployée dans laquelle la surface extérieure latérale du déflecteur est affleurante avec une deuxième surface de carrosserie latérale du véhicule, cette deuxième surface de carrosserie latérale étant dissimulée par le déflecteur lorsqu'il est dans la position avant rétractée, le véhicule comprenant également un actionneur, notamment électrique ou pneumatique, relié à au moins l'une des biellettes pour lui imposer un pivotement par rapport à la structure caractérisé en ce qu'il comprend les étapes suivantes :
- réception par un calculateur du véhicule de données représentatives de la vitesse du véhicule,
- comparaison entre la vitesse du véhicule et des valeurs de seuil déterminées,
- envoi d'une consigne de déploiement et de rétractation à l'actionneur commandant respectivement le déploiement et la rétractation du déflecteur lorsque la vitesse du véhicule est respectivement supérieure et inférieure à une valeur de seuil déterminée

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] illustre schématiquement un véhicule automobile vu de côté comprenant un déflecteur arrière latéral selon l'invention ;
[Fig 2] est une vue schématique du véhicule automobile de la figure 1, vu de l'arrière ;
[Fig 3] est une vue d'une section transversale de la partie arrière latérale du véhicule automobile de la figure 1, suivant la ligne de coupe A-A ;
[Fig 4] est une vue schématique analogue à la figure 3 illustrant le débattement d'une porte arrière battante par rapport au déflecteur de l'invention en position avant rétractée ;
[Fig. 5] est une vue schématique analogue à la figure 3 illustrant le déflecteur de l'invention en position avant rétractée ;
[Fig. 6] est une vue schématique analogue à la figure 3 illustrant le déflecteur de l'invention dans une première position intermédiaire entre la position avant rétractée et la position arrière déployée ;
[Fig. 7] est une vue schématique analogue à la figure 3 illustrant le déflecteur de l'invention dans une seconde position intermédiaire entre la position avant rétractée et la position arrière déployée ;
[Fig. 8] est une vue schématique analogue à la figure 3 illustrant le déflecteur de l'invention dans la position arrière déployée ;
[Fig. 9] est une vue schématique analogue à la figure 3 suivant une autre ligne de coupe parallèle à la ligne A-A, illustrant le déflecteur de l'invention en position avant rétractée et des moyens de signalisation lumineuse ainsi que le cordon d'alimentation associé ;
[Fig. 10] est une vue schématique analogue à la figure 3 suivant une autre ligne de coupe parallèle à la ligne A-A, illustrant le déflecteur de l'invention en position arrière déployée et des moyens de signalisation lumineuse ainsi que le cordon d'alimentation associé ;

Dans la description qui suit, les termes « longitudinal », « transversal », « vertical », « avant », « arrière », « gauche » et « droite » sont définis selon le repère orthonormé XYZ classiquement utilisé en conception automobile, dans lequel X désigne un axe longitudinal et est orienté de l'avant vers l'arrière du véhicule, Y désigne un axe horizontal perpendiculaire à l'axe longitudinal X et orienté de la gauche vers la droite du véhicule, et Z désigne axe vertical Z, orthogonal aux axes X et Y, et orienté vers le haut.

Le terme « sensiblement » signifie qu'un léger écart est admis dans le cadre de l'invention par rapport à une valeur nominale déterminée. Par exemple « sensiblement vertical » signifie qu'un écart de l'ordre de 10° est admis dans le cadre de l'invention par rapport à une direction strictement verticale.

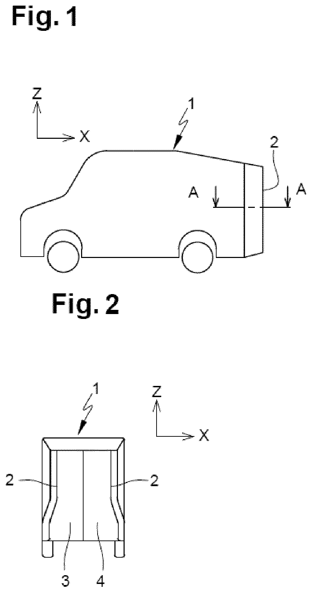

On a représenté aux figures 1 et 2 un véhicule automobile 1. Le véhicule comprend dans sa partie arrière un déflecteur 2 arrière latéral sur chacun de ses côtés.

Le véhicule 1 représenté a typiquement une face arrière sensiblement verticale s'étendant sur toute la hauteur du véhicule. Le véhicule comporte classiquement des portes 3, 4 battantes arrière articulées par leurs bords latéraux sur des montants verticaux de la structure du véhicule 1 (figure 2).

Les déflecteurs 2 s'étendent sur toute la hauteur de la partie arrière du véhicule dans le cas illustré aux figures 1 et 2. Dans d'autres variantes de réalisation non illustrées de l'invention, les déflecteurs 2 peuvent s'étendre sur une partie de la hauteur uniquement. Les déflecteur 2 ont une forme plate.

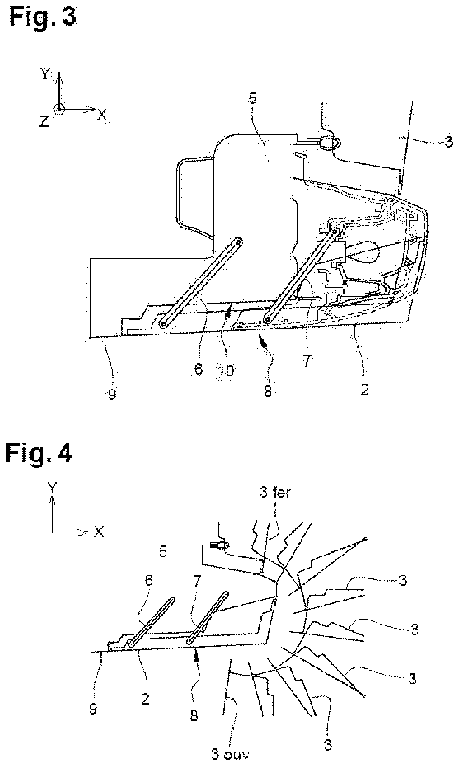

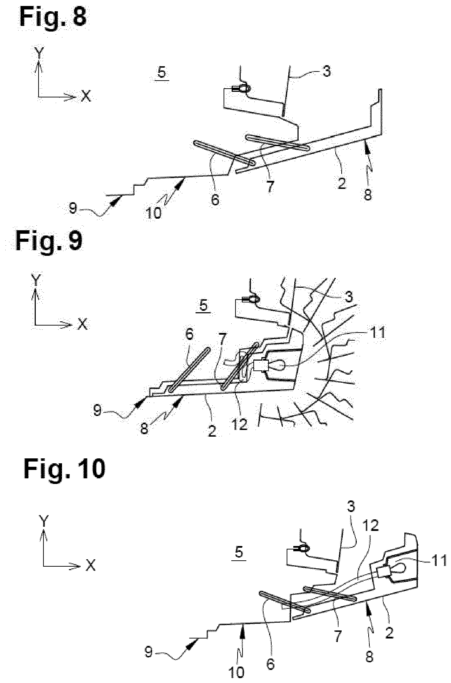

Selon l'invention, chaque déflecteur 2 est relié à la structure 5 du véhicule 2 par un système à biellettes 6, 7 permettant de déplacer le déflecteur 2 entre d'une part une position avant rétractée (figures 3, 4, 5, 9) et une position arrière déployée (figures 8, 10). Dans la position avant rétractée, la surface extérieure 8 latérale du déflecteur 2 est affleurante avec une première surface 9 latérale du véhicule, qui est située en avant du déflecteur 2. Dans cette position le déflecteur 2 s'emboite ou s'insère dans une forme creuse ou un logement conformé sur le côté du véhicule. Dans la position arrière déployée, la surface extérieure 8 latérale du déflecteur 2 est affleurante avec une deuxième surface 10 de carrosserie latérale du véhicule 1 (figures 8, 10). La deuxième surface 10 de carrosserie latérale est dissimulée par le déflecteur 2 lorsqu'il est dans la position avant rétractée.

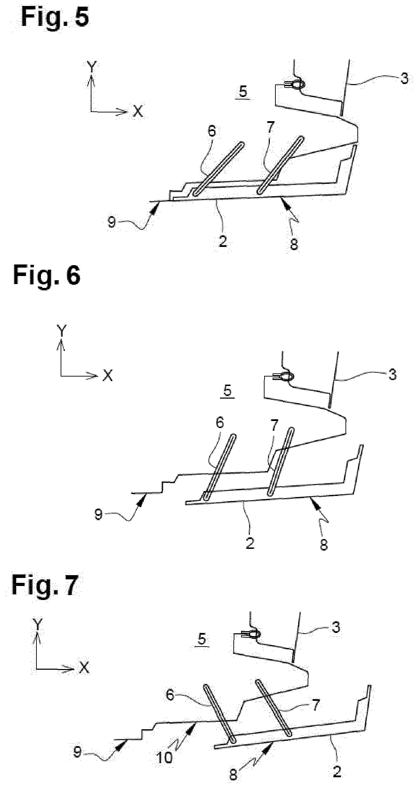

Comme illustré sur les figures, le système à biellettes comprend deux biellettes 6, 7 sensiblement parallèles ayant chacune une extrémité intérieure articulée sur la structure 5 du véhicule 1, et une extrémité extérieure articulée sur une face intérieure du déflecteur 2. On désigne ici par « intérieur » et « extérieur » les zones les plus proches ou éloignées du centre du véhicule 1. Les biellettes 6, 7 sont sensiblement parallèles et articulées selon des axes sensiblement verticaux sur la face intérieure du déflecteur 2. Ces biellettes 6, 7 forment avec le déflecteur 2 un parallélogramme de façon à rester sensiblement parallèle à la direction longitudinale X du véhicule tout en se déplaçant entre sa position avant rétractée et sa position arrière déployée (figures 5 à 8).

On note que deux biellettes sont illustrées pour relier le déflecteur 2 à la structure 5 du véhicule 1. Ceci constitue un minimum. Dans une variante de réalisation non représentée, le déflecteur 2 peut en effet être relié à la structure 5 par deux paires de biellettes 6, 7 à savoir une paire de biellettes hautes et une paire de biellettes basses pour assurer un maintien vertical du déflecteur 2 et garantir son guidage.

Dans la position arrière déployée le déflecteur 2 est décalé longitudinalement vers l'arrière du véhicule 2, à la façon d'un aileron en saillie par rapport à la face arrière du véhicule 2.

Selon l'invention, la surface extérieure 8 latérale du déflecteur 2 dans la position arrière déployée est orientée de façon sensiblement verticale et forme un angle compris entre 10° et 20° par rapport à la direction longitudinale X du véhicule (figure 8). Dans un mode de réalisation préféré, cet angle est plus particulièrement proche de 15°. Avec un angle inférieur à ces valeurs la réduction de la trainée de culot est moins efficace. Au-dessus de ces valeurs, le flux d'air se décollera de la surface extérieure 8 du déflecteur 2 et ne suivra pas la trajectoire recherchée. Le déflecteur sera alors inopérant.

La forme générale du déflecteur 2 peut être assimilée à un L dans une section horizontale. La branche longue du L s'étendant longitudinalement sur le côté du véhicule 1 tandis que la branche courte du L s'étend transversalement sur la face arrière du véhicule 2 en direction des portes battantes arrière 3, 4.

En référence aux figures 9 et 10, le déflecteur 2 comporte des moyens de signalisation lumineuse 11 localisés dans la branche courte. Ces moyens 11 de signalisation sont localisés dans une zone précise, distincte de la section A-A de la figure 1, d'où le fait qu'ils ne soit pas visibles sur les figures 3 à 8 par exemple. Un faisceau électrique 12 déployable est prévu pour alimenter les moyens de signalisation lumineuse 11. Le faisceau 2 se rétracte ou se raccourcit lorsque le déflecteur 2 est dans la position avant rétractée (figure 9), et se déploie ou s'allonge lorsque le déflecteur 2 est dans la position arrière déployée (figure 10).

En référence à la figure 4, on a représenté la porte battante 3 arrière gauche du véhicule dans différentes position angulaire entre sa position fermée et sa position d'ouverture maximale à 180°.

Dans cet exemple la porte battante arrière 3 est articulée par son bord latéral gauche sur un montant vertical de structure du véhicule 1. Dans la position fermée, la porte 3 est sensiblement parallèle à la direction transversale Y du véhicule (cf. réf 3fer à la figure 4). Dans la position d'ouverture maximale, la porte forme un angle sensiblement à 180° par rapport à la position fermée (cf. réf. 3ouv à la figure 4). Un jeu est ménagé entre le bord latéral de la porte battante 3 et le déflecteur 2 en position avant rétractée quelle que soit la position angulaire de la porte 3 entre la position fermée et la position d'ouverture maximale.

Le jeu c'est-à-dire la distance minimale séparant le déflecteur 2 du bord adjacent de la porte battante 3 est de l'ordre de 20 mm, ce jeu pouvant être supérieur. Lorsque le déflecteur 2 est plaqué contre le véhicule dans sa position avant rétractée, il est parfaitement intégré au volume extérieur du véhicule 1 et ne dépasse aucunement à l'arrière ou sur les côtés. De cette façon la porte latérale 3 peut être pivotée sans aucun conflit avec l'actionneur 2. L'accès à l'arrière du véhicule est donc maximal.

On note que la commande du déflecteur 2 est de préférence automatisée, de façon à dépendre par exemple de la vitesse du véhicule. Le véhicule comprend un actionneur (non représenté), notamment un moteur électrique ou un actionneur pneumatique, relié d'une part à la structure du véhicule et d'autre part à au moins l'une des biellettes entrainant le déflecteur 2. Cet actionneur est piloté par un calculateur du véhicule et peut déployer et/ou rétracter automatiquement le déflecteur 2 lorsque des données relatives à la vitesse du véhicule sont reçues par le calculateur et franchissent une valeur de seuil déterminée.

Par exemple lorsque le véhicule roule, le calculateur collecte les informations utiles du véhicule dont la vitesse. Le calculateur est relié à l'actionneur électrique via le réseau électrique CAN du véhicule. La veleur de vitesse seuil provoquant le déploiement du déflecteur est par exemple fixée à 50 km/h. D'autres valeurs de vitesse seuil peuvent être prévues dans le cadre de l'invention. Ces valeurs seuil peuvent être paramétrées sur chaque véhicule. De façon optionnelle, un moyen de commande peut être prévu directement sur le poste de conduite de façon à permettra au conducteur de déployer ou rétracter librement les déflecteurs, indépendamment du dispositif de commande automatique lié à la vitesse du véhicule.

Le procédé d'actionnement du déflecteur arrière latéral 2 comprend les étapes suivantes :
- réception par le calculateur du véhicule de données représentatives de la vitesse du véhicule,
- comparaison entre la vitesse du véhicule et des valeurs de seuil déterminées,
- envoi d'une consigne de déploiement et de rétractation à l'actionneur commandant respectivement le déploiement et la rétractation du déflecteur 2 lorsque la vitesse du véhicule 1 est respectivement supérieure et inférieure à une valeur de seuil déterminée.

L'invention n'est pas limitée au mode de réalisation décrit précédemment mais n'est limitée que par les revendications.

## Revendications

1. Véhicule automobile (1) comprenant sur chacun de ses côtés et dans une zone arrière du véhicule, une première surface (9) de carrosserie latérale sensiblement verticale, un déflecteur (2) arrière latéral relié à la structure (5) du véhicule par un système à biellettes (6, 7) permettant de déplacer le déflecteur (2) entre d'une part une position avant rétractée dans laquelle une surface extérieure (8) latérale du déflecteur (2) est affleurante avec la première surface (9) et d'autre part une position arrière déployée dans laquelle la surface extérieure (8) latérale du déflecteur (2) est affleurante avec une deuxième surface (10) de carrosserie latérale du véhicule, cette deuxième surface (10) de carrosserie latérale étant dissimulée par le déflecteur (2) lorsqu'il est dans la position avant rétractée.

2. Véhicule automobile selon la revendication 1, **caractérisé en ce que** le système à biellettes comprend deux biellettes (6, 7) sensiblement parallèles ayant chacune une extrémité intérieure articulée sur la structure (5) du véhicule, et une extrémité extérieure articulée sur une face intérieure du déflecteur (2).

3. Véhicule automobile selon la revendication 1 ou 2, **caractérisé en ce que** la surface extérieure (8) latérale du déflecteur (2) dans la position arrière déployée est orientée de façon sensiblement verticale et forme un angle compris entre 10° et 20° par rapport à la direction longitudinale (X) du véhicule, cet angle étant plus particulièrement de l'ordre de 15°.

4. Véhicule automobile selon l'une quelconque des revendications précédentes, **caractérisé en ce que** le déflecteur (2) a la forme générale d'un L vue dans une section horizontale, la branche longue du L s'étendant longitudinalement sur le côté du véhicule tandis que la branche courte du L s'étend transversalement sur la face arrière du véhicule.

5. Véhicule automobile selon la revendication 4, **caractérisé en ce que** le déflecteur (2) comporte des moyens de signalisation lumineuse (11) localisés dans la branche courte et dans une zone localisée verticalement, un faisceau électrique (12) déployable étant prévu pour alimenter les moyens de signalisation lumineuse.

6. Véhicule automobile selon l'une quelconque des revendications précédentes, **caractérisé en ce que** le véhicule comprend au moins une porte battante arrière (3) articulée par son bord latéral sur un montant vertical de structure du véhicule, entre une position fermée sensiblement parallèle à la direction transversale (Y) du véhicule et une position d'ouverture maximale formant un angle sensiblement à 180° par rapport à la position fermée, un jeu étant ménagé entre le bord latéral de la porte battante (3) et le déflecteur (2) en position avant rétractée quelle que soit la position angulaire de la porte (3) entre la position fermée et la position d'ouverture maximale.

7. Véhicule automobile selon l'une quelconque des revendications précédentes 1 à 6, **caractérisé en ce qu'**il comprend un actionneur, notamment électrique ou pneumatique, relié à au moins l'une des biellettes pour lui imposer un pivotement par rapport à la structure, cet actionneur étant piloté par un calculateur du véhicule de façon à déployer et/ou rétracter automatiquement le déflecteur (2) lorsque des données relatives à la vitesse du véhicule sont reçues par le calculateur.

8. Procédé d'actionnement d'un déflecteur arrière latéral d'un véhicule automobile, disposé sur chacun de ses côtés et dans une zone arrière du véhicule, le déflecteur (2) étant relié à la structure (5) du véhicule par deux biellettes (6, 7) sensiblement parallèles, permettant de déplacer le déflecteur (2) entre d'une part une position avant rétractée dans laquelle une surface extérieure (8) latérale du déflecteur (2) est affleurante avec une première surface (9) de carrosserie latérale sensiblement verticale du véhicule et d'autre part une position arrière déployée dans laquelle la surface extérieure (8) latérale du déflecteur (2) est affleurante avec une deuxième surface (10) de carrosserie latérale du véhicule, cette deuxième surface (10) de carrosserie latérale étant dissimulée par le déflecteur (2) lorsqu'il est dans la position avant rétractée, le véhicule comprenant également un actionneur, notamment électrique ou pneumatique, relié à au moins l'une des biellettes pour lui imposer un pivotement par rapport à la structure **caractérisé en ce qu'**il comprend les étapes suivantes :
- réception par un calculateur du véhicule de données représentatives de la vitesse du véhicule,
- comparaison entre la vitesse du véhicule et des valeurs de seuil déterminées,
- envoi d'une consigne de déploiement et de rétractation à l'actionneur commandant respectivement le déploiement et la rétractation du déflecteur (2) lorsque la vitesse du véhicule est respectivement supérieure et inférieure à une valeur de seuil déterminée.

## Patentansprüche

1. Kraftfahrzeug (1), umfassend auf jeder seiner Seiten und in einem hinteren Bereich des Fahrzeugs eine erste seitliche, im Wesentlichen vertikale Karosseriefläche (9) und einen seitlichen Heckspoiler (2), der mit der Struktur (5) des Fahrzeugs durch ein System von Schwingarmen (6, 7) verbunden ist, die eine Bewegung des Spoilers (2) zwischen einer vorderen eingefahrenen Position einerseits, in der eine seitliche Außenfläche (8) des Spoilers (2) mit der ersten Fläche (9) bündig ist, und einer hinteren ausgefahrenen Position andererseits, in der die seitliche Außenfläche (8) des Spoilers (2) mit einer zweiten seitlichen Karosseriefläche (10) des Fahrzeugs bündig ist, ermöglichen, wobei diese zweite seitliche Karosseriefläche (10) durch den Spoiler (2) verdeckt ist, wenn sich dieser in der vorderen eingefahrenen Position befindet.

2. Kraftfahrzeug nach Anspruch 1, **dadurch gekennzeichnet, dass** das Schwingarmsystem zwei im Wesentlichen parallele Schwingarme (6, 7) umfasst, die jeweils ein an der Struktur (5) des Fahrzeugs angelenktes inneres Ende und ein an einer Innenseite des Spoilers (2) angelenktes äußeres Ende aufweisen.

3. Kraftfahrzeug nach Anspruch 1 oder 2, **dadurch gekennzeichnet, dass** die seitliche Außenfläche (8) des Spoilers (2) in der hinteren ausgefahrenen Position im Wesentlichen vertikal ausgerichtet ist und einen Winkel zwischen 10 ° und 20 ° zur Längsrichtung (X) des Fahrzeugs ausbildet, wobei dieser Winkel insbesondere im Bereich von 15 ° liegt.

4. Kraftfahrzeug nach einem der vorangehenden Ansprüche, **dadurch gekennzeichnet, dass** der Spoiler (2) in einem horizontalen Schnitt gesehen die allgemeine Form eines L aufweist, wobei sich der lange Schenkel des L in Längsrichtung auf der Seite des Fahrzeugs erstreckt, während sich der kurze Schenkel des L quer über die Rückseite des Fahrzeugs erstreckt.

5. Kraftfahrzeug nach Anspruch 4, **dadurch gekennzeichnet, dass** der Spoiler (2) Lichtsignalmittel (11) aufweist, die im kurzen Schenkel und in einem vertikal lokalisierten Bereich angeordnet sind, wobei ein ausziehbarer Kabelstrang (12) zur Versorgung der Lichtsignalmittel vorgesehen ist.

6. Kraftfahrzeug nach einem der vorangehenden Ansprüche, **dadurch gekennzeichnet, dass** das Fahrzeug zumindest eine hintere Schwenktür (3) aufweist, die mit ihrer Seitenkante an einer vertikalen Säule der Fahrzeugstruktur zwischen einer geschlossenen Position, die zur Querrichtung (Y) des Fahrzeugs im Wesentlichen parallel ist, und einer maximalen Öffnungsposition, die einen Winkel von im Wesentlichen 180 ° in Bezug auf die geschlossene Position bildet, angelenkt ist, wobei zwischen der Seitenkante der Schwenktür (3) und dem Spoiler (2) in der vorderen eingefahrenen Position unabhängig von der Winkelposition der Tür (3) zwischen der geschlossenen Position und der maximalen Öffnungsposition ein Spielraum vorgesehen ist.

7. Kraftfahrzeug nach einem der vorangehenden Ansprüche 1 bis 6, **dadurch gekennzeichnet, dass** es ein insbesondere elektrisches oder pneumatisches Stellglied umfasst, das mit zumindest einem der Schwingarme verbunden ist, um ihm eine Schwenkbewegung in Bezug auf die Struktur aufzuzwingen, wobei das Stellglied durch einen Rechner des Fahrzeugs so gesteuert wird, dass es den Spoiler (2) ausfährt oder einfährt, wenn Daten über die Geschwindigkeit des Fahrzeugs durch den Rechner empfangen werden.

8. Verfahren zur Betätigung eines seitlichen Heckspoilers eines Kraftfahrzeugs, der auf jeder seiner Seiten und in einem hinteren Bereich des Fahrzeugs angeordnet ist, wobei der Spoiler (2) mit der Struktur (5) des Fahrzeugs durch zwei im Wesentlichen parallele Schwingarme (6, 7) verbunden ist, die eine Bewegung des Spoilers (2) zwischen einer vorderen eingefahrenen Position einerseits, in der eine seitliche Außenfläche (8) des Spoilers (2) mit einer ersten seitlichen, im Wesentlichen vertikalen Karosseriefläche (9) des Fahrzeugs bündig ist, und einer hinteren ausgefahrenen Position andererseits, in der die seitliche Außenfläche (8) des Spoilers (2) mit einer zweiten seitlichen Karosseriefläche (10) des Fahrzeugs bündig ist, ermöglichen, wobei die zweite seitliche Karosseriefläche (10) durch den Spoiler (2) verdeckt ist, wenn sich dieser in der vorderen eingefahrenen Position befindet, wobei das Fahrzeug außerdem ein insbesondere elektrisches oder pneumatisches Stellglied umfasst, das mit zumindest einem der Schwingarme verbunden ist, um ihm eine Schwenkbewegung in Bezug auf die Struktur aufzuzwingen, **dadurch gekennzeichnet, dass** es die folgenden Schritte umfasst:
- Empfangen von für die Geschwindigkeit des Fahrzeugs repräsentativen Daten durch einen Rechner des Fahrzeugs,
- Vergleichen der Geschwindigkeit des Fahrzeugs mit bestimmten Schwellenwerten,
- Senden eines Aus- bzw. Einfahrbefehls an das Stellglied, der das Ein- bzw. Ausfahren des Spoilers (2) steuert, wenn die Geschwindigkeit des Fahrzeugs über bzw. unter einem bestimmten Schwellenwert liegt.

## Claims

1. Motor vehicle (1) comprising, on each of its sides and in a rear zone of the vehicle, a first, substantially vertical lateral bodywork surface (9), a lateral rear deflector (2) connected to the structure (5) of the vehicle by a system with connecting rods (6, 7) making it possible to move the deflector (2) between, on the one hand, a retracted front position in which a lateral outer surface (8) of the deflector (2) is flush with the first surface (9) and, on the other hand, a deployed rear position in which the lateral outer surface (8) of the deflector (2) is flush with a second lateral bodywork surface (10) of the vehicle, this second lateral bodywork surface (10) being concealed by the deflector (2) when the latter is in the retracted front position.

2. Motor vehicle according to Claim 1, **characterized in that** the system with connecting rods comprises two substantially parallel connecting rods (6, 7) each having an inner end articulated on the structure (5) of the vehicle, and an outer end articulated on an inner face of the deflector (2).

3. Motor vehicle according to Claim 1 or 2, **characterized in that** the lateral outer surface (8) of the deflector (2) in the deployed rear position is oriented substantially vertically and forms an angle of between 10° and 20° with respect to the longitudinal direction (X) of the vehicle, this angle being more particularly of the order of 15°.

4. Motor vehicle according to any one of the preceding claims, **characterized in that** the deflector (2) has the overall shape of an L when viewed in a horizontal section, the long leg of the L extending longitudinally on the side of the vehicle while the short leg of the L extends transversely on the rear face of the vehicle.

5. Motor vehicle according to Claim 4, **characterized in that** the deflector (2) has luminous signalling means (11) located in the short leg and in a vertically located zone, a deployable wiring harness (12) being provided so as to supply the luminous signalling means with power.

6. Motor vehicle according to any one of the preceding claims, **characterized in that** the vehicle comprises at least one rear swinging door (3) articulated via its lateral edge on a structural vertical upright of the vehicle, between a closed position substantially parallel to the transverse direction (Y) of the vehicle and a maximum opening position forming an angle of substantially 180° with respect to the closed position, a clearance being provided between the lateral edge of the swinging door (3) and the deflector (2) in the retracted front position regardless of the angular position of the door (3) between the closed position and the maximum opening position.

7. Motor vehicle according to any one of the preceding Claims 1 to 6, **characterized in that** it comprises an actuator, in particular an electric or pneumatic actuator, connected to at least one of the connecting rods so as to make it pivot with respect to the structure, this actuator being operated by a computer of the vehicle so as to automatically deploy and/or retract the deflector (2) when data relating to the speed of the vehicle are received by the computer.

8. Method for actuating a lateral rear deflector of a motor vehicle, which is disposed on each of the sides thereof and in a rear zone of the vehicle, the deflector (2) being connected to the structure (5) of the vehicle by two substantially parallel connecting rods (6, 7), making it possible to move the deflector (2) between, on the one hand, a retracted front position in which a lateral outer surface (8) of the deflector (2) is flush with a first, substantially vertical lateral bodywork surface (9) of the vehicle and, on the other hand, a deployed rear position in which the lateral outer surface (8) of the deflector (2) is flush with a second lateral bodywork surface (10) of the vehicle, this second lateral bodywork surface (10) being concealed by the deflector (2) when the latter is in the retracted front position, the vehicle also comprising an actuator, in particular an electric or pneumatic actuator, connected to at least one of the connecting rods so as to impose thereon pivoting with respect to the structure, **characterized in that** it comprises the following steps:
- reception by a computer of the vehicle of data representative of the speed of the vehicle,
- comparison between the speed of the vehicle and determined threshold values,
- sending of a deployment and retraction setpoint to the actuator ordering the deployment and the retraction of the deflector (2) when the speed of the vehicle is higher or lower, respectively, than a determined threshold value.
